# EUROPÄISCHE PATENTSCHRIFT

(11) **EP 0 623 726 B1**
(45) Veröffentlichungstag und Bekanntmachung des Hinweises auf die Patenterteilung: **09.04.1997**
(21) Anmeldenummer: 94106760.5
(22) Anmeldetag: 29.04.1994
(51) Int. Cl.: E05F 1/10, B62D 25/12, B60J 5/10, F16F 1/12, F16F 9/54

(54) **Vorrichtung zum statischen Ausgleich von Kräften**
Means for statical equalisation of forces
Appareil pour équilibration statique des forces

(30) Priorität: 30.04.1993 DE 4314227
(43) Veröffentlichungstag der Anmeldung: 09.11.1994
(73) Patentinhaber: AL-KO KOBER AG, D-89359 Kötz (DE)
(72) Erfinder: Gerlach,Rainer,Dr-Ing, D-09127Chemnitz (DE)
(74) Vertreter: Munk, Ludwig, Dipl.-Ing.

(56) Entgegenhaltungen:
- CH-A- 358 002
- DE-A- 2 717 856
- DE-C- 167 665
- PATENT ABSTRACTS OF JAPAN vol. 10, no. 146 (M-482) (2203) 7. Januar 1986 & JP-A-61 001 577 (NITSUSAN SHIYATAI K.K.)

## Beschreibung

Die Erfindung betrifft eine Vorrichtung gemäß dem Oberbegriff des Anspruchs 1.

Auf zahlreichen technischen Einsatzgebieten werden für die Abstützung von Bauteilen, die um eine Achse schwenkbar gelagert sind, Druckfedern verwendet. Typische Anwendungsfälle sind die Abstützung von Motorhauben, Kofferraumdeckeln oder Heckklappen an Kraftfahrzeugen. Als Druckfederstützen werden üblicherweise Stahl- oder Gasfedern verwendet. Diese Federn unterstützen die Schwenkbewegung des zu bewegenden Bauteiles aus der Ruhestellung in eine Endstellung und stützen das Bauteil in der Endstellungab. Kraftmäßig kann das zu bewegende Bauteil als Kurbelarm bewertet werden, der an einem Fundamentpunkt, z.B. der Fahrzeugkarosserie, schwenkbar gelagert ist und an dem eine konstante Kraft in gleichbleibender Richtung, z.B. Gewichtskraft, angreift. Die zugeordnete Druckfederstütze ermöglicht dabei den teilweisen statischen Ausgleich der am Kurbelarm angreifenden Kraft.

Hierfür sind verschiedene Beispiele bekannt. So beschreibt DE 35 23 491 eine Gasfedereinrichtung zum Aufbringen von Stellkräften vorgewählter Größen auf ein Bauteil. Eine Gasfeder und die Verwendung dieser Gasfeder als Hubhilfe für den Kofferraumdeckel ist Gegenstand von DE 39 04 866. Diese bekannten Anordnungen ermöglichen aber nur für einen bestimmten Arbeitsbereich den näherungsweisen Kraftausgleich. Ein wesentlicher Nachteil besteht jedoch darin, daß die Gleichgewichtslage nur in einem Punkt des Arbeitsbereichs erzielt werden kann und somit für alle davon entfernt liegenden Punkte des Arbeitsbereichs der Kraftausgleich unvollkommen ist, wobei mit der Bewegung der Kurbel Arbeit entweder zu- oder abgeführt werden muß.

Das gilt auch für die aus der CH-A-35 80 02 bekannte Anordnung. Dabei handelt es sich um ein Klappfenster mit einer Druckfederstütze, die auf das Klappfenster in der Schließstellung eine Kraft in Schließrichtung und in der Öffnungsstellung eine Kraft in Öffnungsrichtung ausübt. Die Druckfederstütze ist einerseits an das Klappfenster angelenkt und andererseits auf einer Gleitbahn aufgenommen, deren Enden als Stützlager für die Druckfederstütze dienen. Ein statischer Kraftausgleich über dem gesamten Schwenkbereich ist hier weder erwünscht noch möglich.

Die DE-C-16 76 65 zeigt einen mit einer Zugfeder versehenen Türschließer für eine um eine lotrechte, zur Richtung des Türgewichts parallele Achse schwenkbar gelagerte Tür. Auch hier ist ein statischer Kraftausgleich zwischen Gewichtskraft und Federkraft weder erwünscht noch möglich.

Hiervon ausgehend ist es die Aufgabe der vorliegenden Erfindung, eine Vorrichtung gattungsgemäßer Art so zu verbessern, daß ein vollständiger Kraftausgleich über dem gesamten Arbeitsbereich ermöglicht wird.

Diese Aufgabe wird durch das Kennzeichen des Anspruchs 1 gelöst.

Der elastische Druckstab kann dabei entweder im Kurbellager fest und im Fundamentlager beweglich oder im Fundamentlager fest und im Kurbellager beweglich gelagert sein, wobei das jeweilige Loslager auf einer solchen Bahn geführt wird, die in jedem Betriebspunkt die Längsachse des elastischen Druckstabes zur Normalen hat, und bei der Bewegung der Kurbel die Änderung der Federenergie des elastischen Druckstabes gleich ist der zu- oder abgeführten äußeren Systemarbeit, d.h. die entsprechende potentielle Energie als Federenergie bereitgestellt oder gespeichert.

In Ausgestaltung der Erfindung wird vorgeschlagen, daß in den Konturen der Führungsbahnen (FGD) bzw. (FGB) Erhöhungen (eh) oder Vertiefungen (vt), oder beides kombiniert ausgestaltet sind. Somit können angestrebte Gleichgewichtsstörungen erreicht werden. Desweiteren sind die Führungsbahnen (FGD) bzw. (FGB) über große Bereiche mit Kreis- oder Ellipsenbahnen nahezu identisch und können deshalb durch diese oder ähnliche, fertigungsgünstig herstellbare Bahnen angenähert werden, wobei sich konkave Konturen ergeben Ausführungsbeispiele der erfindungsgemäßen Druckfedereinrichtung sind in der Zeichnung dargestellt und werden nachfolgend beschrieben:

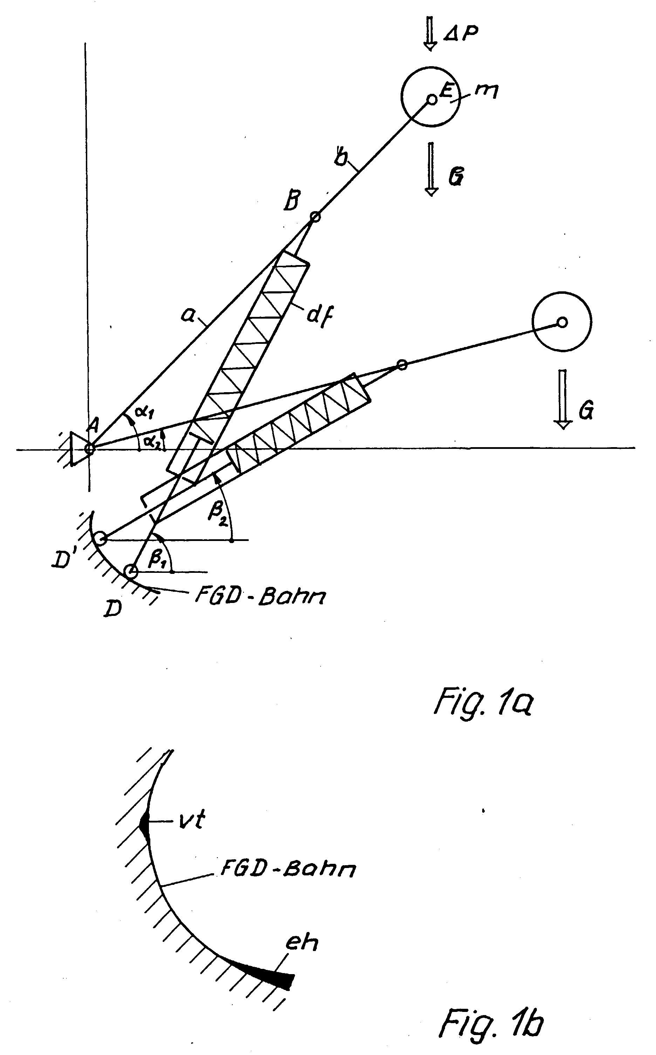

Fig. 1a zeigt die im Gleichgewicht stehende Anordnung der bahngeführten Druckfederstütze (df) mit dem Stützwinkel Beta 1 (β₁) zum Ausgleich konstanter Kräfte mit beweglichem Fundamentlager (D). Die auszugleichende konstante und richtungsgleichbleibende Kraft (G), z.B. Gewichtskraft der Masse (m), greift am Kurbelarm (a+b) im Punkt E mit dem Erhebungswinkel Alpha 1 (α₁) im Abstand (a+b) vom Fundamentdrehpunkt (A) an. Die Druckfederstütze (df) mit linearer oder nichtlinearer Kraft-Weg-Kennlinie ist einerseits am Kurbelarm (b) im Punkt (B) drehbar gelagert und stützt sich andererseits über ein Loslager (D) auf der Führungsbahn (FGD) im Fundament ab, die dadurch ermittelt wird, daß ihre Normale in jedem Bahnabstützungspunkt mit der Längsachse der Druckfederstütze zusammenfällt, und daß die zu- oder abzuführende äußere Arbeit bei der Bewegung der auszugleichenden konstanten und richtungsgleichbleibenden Kraft (G) als Federenergie gespeichert oder freigegeben wird. Durch eine kurzzeitig wirkende, zusätzliche Kraft Delta P (ΔP), die lediglich die Systemreibung zu überwinden hat, wird die Kurbel von Alpha 1 (α₁) nach Alpha 2 (α₂) bewegt. Als Folge auf die versuchte Gleichgewichtsstörung stellt sich selbständig eine neue Gleichgewichtslage der Druckfederstütze (df) ein, indem sich das Loslager der Druckfederstütze auf der FGD-Bahn von D nach D' bewegt und der Stützwinkel von Beta 1 (β₁) auf Beta 2 (β₂) verändert. Gewollte Gleichgewichtsstörungen können durch FGD-Bahn-Abweichungen (Fig. 1b), wie Vertiefungen (vt), oder Erhöhungen (eh), oder beides kombiniert, erreicht werden.

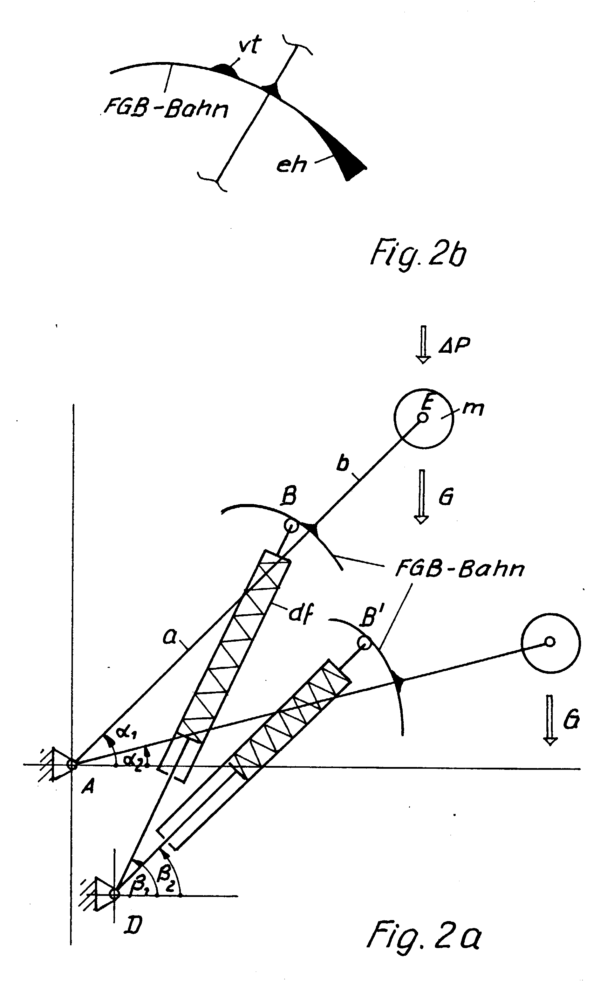

Fig. 2a zeigt die im Gleichgewicht stehende Anordnung der bahngeführten Druckfederstütze (df) mit dem Stützwinkel Beta 1 (β₁) zum Ausgleich konstanter Kräfte mit beweglichem Kurbellager (B). Die auszugleichende konstante und richtungsgleichbleibende Kraft (G), z.B. Gewichtskraft der Masse (m), greift am Kurbelarm (a+b) im Punkt (E) mit dem Erhebungswinkel Alpha 1 (α₁) im Abstand (a+b) vom Fundamentdrehpunkt (A) an. Die Druckfederstütze (df) mit linearer oder nichtlinearer Kraft-Weg-Kennlinie ist einerseits im Fundamentlager (D) drehbar gelagert und stützt sich andererseits über ein Loslager (B) auf der Führungsbahn (FGB) am Kurbelarm (a) ab, die dadurch ermittelt wird, daß Ihre Normale in jedem Bahnabstützungspunkt mit der Längsachse der Druckfederstütze (df) zusammenfällt und daß die zu- oder abzuführende äußere Arbeit bei der Bewegung der auszugleichenden konstanten und richtungsgleichbleibenden Kraft (G) als Federenergie gespeichert oder freigegeben wird. Durch eine kurzzeitig wirkende, zusätzliche Kraft Delta P (ΔP), die lediglich die Systemreibung zu überwinden hat, wird die Kurbel (a+b) von Alpha 1 (α₁) nach Alpha 2 (α₂) bewegt. Als Folge der versuchten Gleichgewichtsstörung stellt sich durch die Anordnung selbständig eine neue Gleichgewichtslage der Druckfederstütze (df) ein, indem sich das Loslager der Druckfederstütze auf der FGB-Bahn von B nach B' bewegt und der Stützwinkel von Beta 1 (β₁) auf Beta 2 (β₂) verändert. Gewollte Gleichgewichtsstörungen können durch FGB-Bahn-Abweichungen (Fig.2b), wie Vertiefungen (vt), oder Erhöhungen (eh), oder beides kombiniert, erreicht werden. Die Ausführungsbeispiele nach Fig. 1 und Fig.2 sind z.B. für Motorhauben, Heck- und Seitenklappen oder Bordwände an Kfz geeignet. Die Führungsbahnen GFD bzw. FGB sind in jedem Fall konkav.

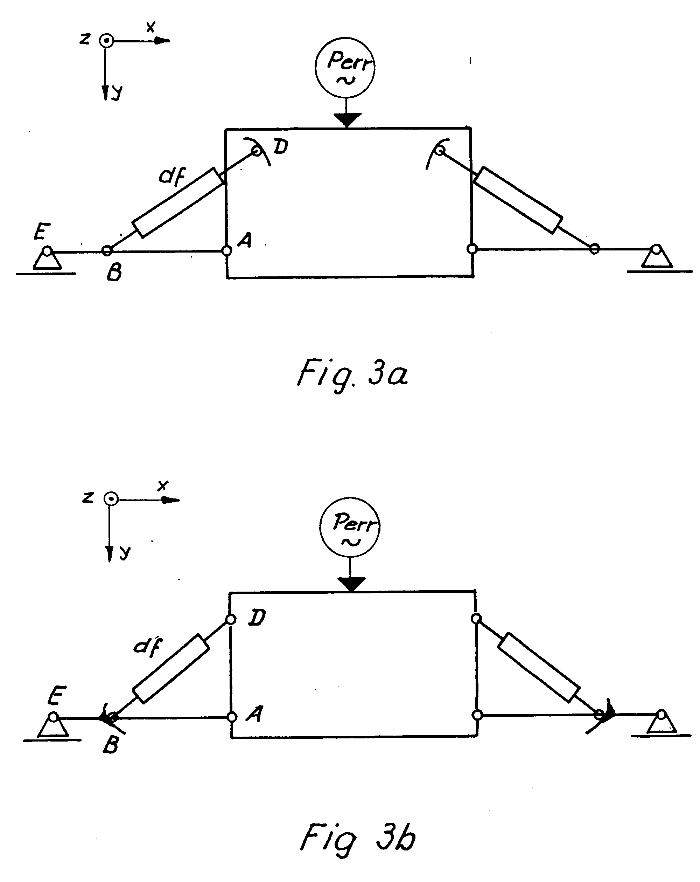

Fig.3a und Fig.3b zeigt die kinematische Umkehrung und doppelte Anwendung der in Fig.1a und Fig.2a dargestellten Anordnungen. Damit wird aus den Überlagerungen der Kreisausgleichsbahnen der Punkte (E) und den x-Freiheitsgraden der Loslager (E) eine Ausgleichsfläche in xz-Richtung und bei den Loslagergestaltungen (E) in z-Richtung ein Ausgleichsraum in xyz-Richtung ermöglicht. Im dynamischen Fall können damit, von Reibungseinflüssen abgesehen, aktiv erregte ebene und räumliche Schwingungen isoliert +werden. Gleiches gilt auch für passiv erregte Systeme, d.h. Erregung der statisch ausgeglichenen Masse durch die Lager (E) (erregte Umwelt).

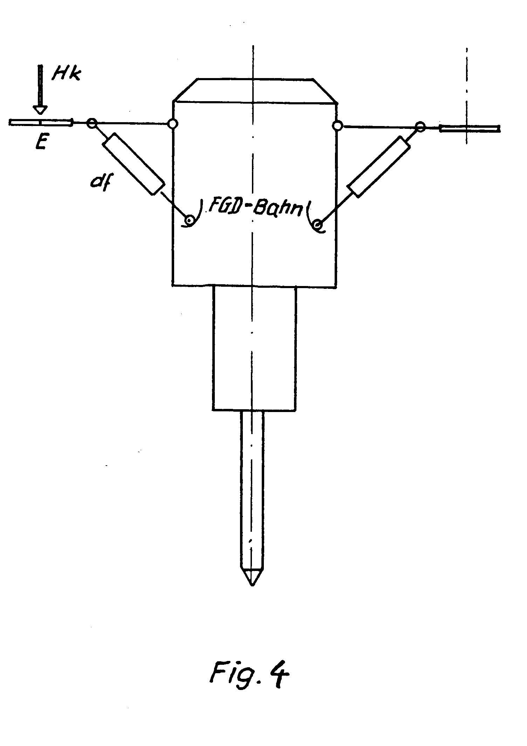

Fig.4 zeigt wie Fig.3a eine kinematische Umkehrung und doppelte Anwendung der in Fig.1a dargestellten Anordnung zum Zwecke des Ausgleichs einer konstanten Handkraft an Schlagwerkzeugen oder Vibrationsgeräten, wodurch eine Schwingungsisolierung des Griffes an Schlagwerkzeugen erreicht wird. Die Schwingungen des aktiv erregten Schlagwerkzeuges können, von Reibungseinflüssen abgesehen, auf den Griff nicht übertragen werden, weil das System im Punkt (E) nur eine konstante Kraft zuläßt. Gleiches gilt für die in Fig.3a und Fig.3b dargestellten Anordnungen.

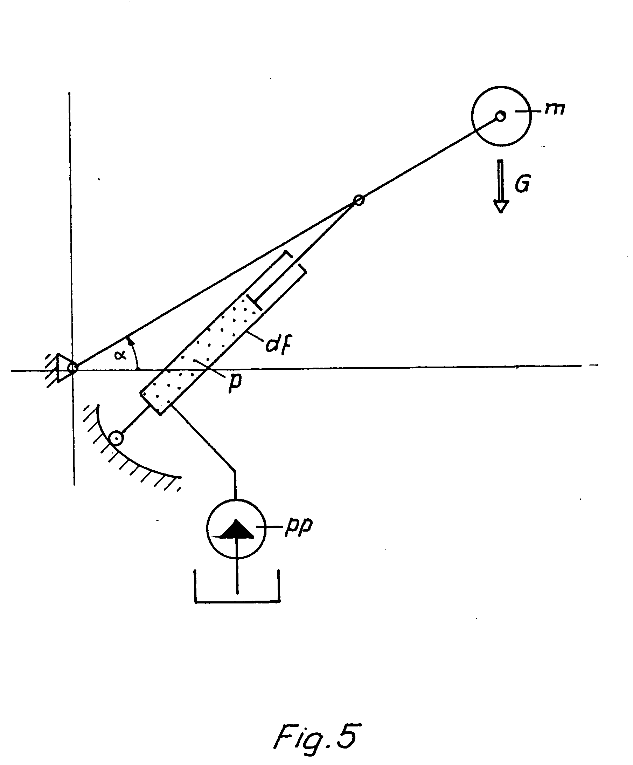

Fig.5 zeigt die Anordnung der bahngeführten Druckfederstütze zum Ausgleich konstanter Kräfte mit einer gasgefüllten Druckfederstütze (df) entsprechend der Anordnung nach Fig.1a, wobei die gasgefüllte Seite mit einer pneumatischen Pumpe (pp) verbunden ist. Die passive Anordnung nach Fig.1a wird dadurch aktiviert. Mit Überwinden oder Unterschreiten des pneumatischen Ausgleichsdruckes (p) kann die Masse (m) mit dem Gewicht (G) auf Grund ihres statischen Ausgleichs gehoben oder gesenkt werden, ohne Hubarbeit zu leisten, lediglich durch Überwindung der Reibungseinflüsse. Gleiches trifft auch für die Anordnungen nach Fig.2a, Fig.3a und Fig.3b zu, sofern ebenfalls eine gasgefüllte Druckfederstütze in Kombination mit einer pneumatischen Pumpe verwendet wird.

Die dargestellten und beschriebenen Beispiele lassen folgende Maßnahmen und Vorteile erkennen:
a) Allen Ausführungen liegt ein ebenes, dreigliedriges, konkaves Kurvengetriebe (Kurbeltrieb) zugrunde.
b) Die längenveränderliche und drehbare Druckfederstütze besitzt zwei Freiheitsgrade (längenveränderlich und drehbar).
c) Die längenveränderliche Druckfederstütze wird auf einer konkaven Bahn geführt.
d) Die Längsachse der längenveränderlichen Druckfedereinrichtung ist in jedem Betriebspunkt Normale der konkaven Bahn.
e) Abgesehen von Reibungskräften wirken auf der konkaven Bahn nur Normalkräfte in Richtung der längenveränderlichen Druckfederstütze.
f) Die Verstellbarkeit der längenveränderlichen Druckfederstütze auf der konkaven Bahn wird durch, die von der Kurbelbewegung geweckten, Tangentialkräfte, die sich zu Null hin abbauen, erreicht. Die Kraftkopplung ist primär.

In derselben Weise wie konstante, richtungsgleichbleibende Kräfte, wie sie obigen Beispielen zugrunde liegen, lassen sich natürlich auch quasistatische, in Größe und/oder Richtung veränderliche Kräfte ausgleichen.

### Bezugszeichen:

- a: Länge des Hebels AB auf der Kurbel (a+b)
- A: Fundamentpunkt der Kurbel (a+b)
- FGB: Führung der Druckfederstütze (df) im Kurbelpunkt (B)
- FGD: Führung der Druckfederstütze (df) im Fundamentpunkt (D)
- α₁: Erhebungswinkel Alpha 1 der Kurbel (a+b) in der Lage 1
- α₂: Erhebungswinkel Alpha 2 der Kurbel (a+b) in der Lage 2
- b: Länge des Hebels BE auf der Kurbel (a+b)
- B: Anlenkpunkt der Druckfederstütze auf der Kurbel (a+b)
- β₁: Stützwinkel Beta 1 der Druckfederstütze (df) in der Lage 1
- β₂: Stützwinkel Beta 2 der Druckfederstütze (df) in der Lage 2
- ΔP: Kurzzeitig wirkender Kraft impuls Delta P
- df: Druckfederstütze
- D: Fundamentpunkt der Druckfederstütze
- eh: Erhebung auf AGD- oder AGB-Bahn
- E: Angriffspunkt der auszugleichenden Kraft (G)
- G: Auszugleichende, konstante Kraft
- Hk: Auszugleichende, konstante Handkraft
- m: Masse mit dem Gewicht (G)
- p: Pneumatischer Druck in der Druckfederstütze (df)
- pp: Pneumatische Pumpe
- Perr: Periodische Erregungskraft
- vt: Vertiefung in der AGB- oder AGD-Bahn
- x: Ebene horizontale Koordinate
- y: Ebene vertikale Koordinate
- z: Räumliche Koordinate

## Patentansprüche

1. Vorrichtung zum statischen Ausgleich von konstanten, richtungsgleichbleibenden Kräften und/oder zumindest quasistatischen, in Größe und/oder Richtung monoton stetig veränderlichen Kräften, mit einem, an einem Fundamentpunkt schwenkbar gelagerten Kurbelarm, an dem die auszugleichende Kraft angreift, wobei dem Kurbelarm mindestens eine Druckfederstütze zur Abstützung dieser angreifenden Kraft zugeordnet ist, **dadurch gekennzeichnet, daß** die Druckfederstütze (df) an dem Ende einer Seite in einem Festpunkt drehbar gelagert und am Ende der entgegengesetzten Seite in einer Führungsbahn freibeweglich derart abgestützt ist, daß die Normale der Führungsbahn in jedem Bahnabstützungspunkt mit der Längsachse der Druckfederstütze (df) zusammenfällt und die bezüglich der auszugleichenden Kraft (G) aufzubringende oder freiwerdende Bewegungsarbeit als äquivalente Federenergie freigebbar oder speicherbar ist.

2. Vorrichtung nach Anspruch 1, **dadurch gekennzeichnet, daß** die Druckfederstütze (df) am Kurbelarm (a) drehbar gelagert und auf der dem Fundament zugeordneten Führungsbahn (FGD) freibeweglich abgestützt ist.

3. Vorrichtung nach Anspruch 1, **dadurch gekennzeichnet, daß** die Druckfederstütze (df) am Fundament drehbar gelagert und auf der dem Kurbelarm (a) zugeordneten Führungsbahn (FGB) freibeweglich abgestützt ist.

4. Vorrichtung nach einem der vorhergehenden Ansprüche, **dadurch gekennzeichnet, daß** die Führungsbahn (FGD, FGB) eine konkave Kontur aufweist.

5. Vorrichtung nach einem der vorhergehenden Ansprüche, **dadurch gekennzeichnet, daß** in der Kontur der Führungsbahnen (FGD bzw. FGB) Erhöhungen (eh) und, oder Vertiefungen (vt) vorgesehen sind.

6. Vorrichtung nach einem der vorhergehenden Ansprüche, **dadurch gekennzeichnet, daß** die Führungsbahnen (FGD bzw. FGB) durch Kreis- bzw. Ellipsenbahnen oder ähnliche fertigungsgünstig herstellbare Bahnen angenähert werden können.

## Claims

1. Apparatus for the static equalisation of constant, directionally stable forces and/or at least quasi-static forces which are always monotonically variable in respect of magnitude and/or direction, having a crank arm which is pivotably mounted at a base point and with which pivot arm the force to be equalised co-operates, at least one compression spring support being associated with the crank arm to support this co-operating force, characterised in that the compression spring support (df) is rotatably mounted at the end of one side in a fixed point and is supported, in a freely displaceable manner, at the end of the opposite side in a guide path so that the normal of the guide path coincides, at each path supporting point, with the longitudinal axis of the compression spring support (df), and the displacement work which is to be applied or becomes free in respect of the force (G) to be equalised is releasable or storable as equivalent resilient energy.

2. Apparatus according to claim 1, characterised in that the compression spring support (df) is rotatably mounted on the crank arm (a) and is supported in a freely displaceable manner on the guide path (FGD) associated with the base.

3. Apparatus according to claim 1, characterised in that the compression spring support (df) is rotatably mounted on the base and is supported in a freely displaceable manner on the guide path (FGB) associated with the crank arm (a).

4. Apparatus according to one of the preceding claims, characterised in that the guide path (FGD, FGB) has a convex configuration.

5. Apparatus according to one of the preceding claims, characterised in that raised portions (eh) and/or depressions (vt) are provided in the configuration of the guide paths (FGD and FGB respectively).

6. Apparatus according to one of the preceding claims, characterised in that the guide paths (FGD and FGB respectively) can be moved closer through circular or elliptical paths or similar technically producible paths.

## Revendications

1. Dispositif pour l'équilibrage statique de forces constantes, de direction invariable, et/ou de forces au moins quasi statiques, à variation constamment monotone de leur grandeur et/ou de leur direction, avec un bras de manivelle, monté à pivotement sur un point de fondement et sur lequel agit la force à équilibrer, au moins un soutien à ressort de pression étant associé au bras de manivelle afin de soutenir cette force agissante, **caractérisé** en ce que le soutien à ressort de pression (df) est monté à rotation dans un point fixe à l'extrémité d'un côté et, à l'extrémité du côté opposé, est appuyé en libre déplacement dans une voie de guidage de telle sorte que la normale de la voie de guidage en chaque point d'appui de la voie coïncide avec l'axe longitudinal du soutien à ressort de pression (df), et le travail de déplacement libéré ou à exercer ou libéré relativement à la force à compenser (G) peut être accumulé ou libéré comme énergie de ressort équivalente.

2. Dispositif selon la revendication 1, **caractérisé** en ce que le soutien à ressort de pression (df) est monté à rotation sur le bras de manivelle (a) et est appuyé en libre déplacement sur la voie de guidage (FGD) associée au fondement.

3. Dispositif selon la revendication 1, **caractérisé** en ce que le soutien à ressort de pression (df) est monté à rotation sur le fondement et est appuyé en libre déplacement sur la voie de guidage (FGB) associée au bras de manivelle (a).

4. Dispositif selon l'une des revendications précédentes, **caractérisé** en ce que la voie de guidage (FGD, FGB) présente un contour concave.

5. Dispositif selon l'une des revendications précédentes, **caractérisé** en ce que des surélévations (eh) et/ou des renfoncements (vt) sont prévus dans le contour des voies de guidage (FGD ou FGB).

6. Dispositif selon l'une des revendications précédentes, **caractérisé** en ce que les voies de guidage (FGD ou FGB) peuvent être approchées par des voies circulaires ou elliptiques, ou des voies analogues pouvant être réalisées par une fabrication avantageuse.
